# EUROPÄISCHE PATENTANMELDUNG

(11) **EP 3 106 258 A1**
(43) Veröffentlichungstag der Anmeldung: **21.12.2016**
(21) Anmeldenummer: 15172350.9
(22) Anmeldetag: 16.06.2015
(51) Int. Cl.: B23P 19/08, B65G 47/14

(54) **VORRICHTUNG ZUM ZUSAMMENSTECKEN VON SCHRAUBENROHLINGEN UND UNTERLEGSCHEIBEN**

(71) Anmelder: Nedschroef Altena GmbH, 58762 Altena (DE)
(72) Erfinder: Ganitis, Dimitros, 58762 Altena (DE); Wennehorst, Ewald, 58644 Iserlohn (DE); Munz, Karlheinz, 58809 Neuenrade (DE)
(74) Vertreter: Patentanwälte Dörner & Kötter PartG mbB

(57) **Zusammenfassung**

Die Erfindung betrifft eine Vorrichtung zum Zusammenstecken von Schraubenrohlingen und Unterlegscheiben, umfassend einen ersten Rütteltopf (1) zur Aufnahme der Schraubenrohlinge (7), dessen erste Wendel (11) mit einer ersten einen Führungsschlitz (12) zum Durchtritt der Bolzen (72) der Schraubenrohlinge (7) aufweisenden Gleitschiene (2) zur Führung der Schraubenrohlinge (7) verbunden ist, und einen zweiten Rütteltopf (3) zur Aufnahme der Unterlegscheiben (8), der innerhalb des ersten Rütteltopfes (1) konzentrisch zu diesem angeordnet ist und dessen zweite Wendel (31) mit einer zweiten Gleitschiene (4) zur Führung der Unterlegscheiben (8) verbunden ist, wobei die beiden Rütteltöpfe (1, 3) mit wenigstens einem Schwingungserreger (5) verbunden sind und wobei die erste Gleitschiene (2) wenigstens an einem Endabschnitt parallel zu der zweiten Gleitschiene (4) über dieser angeordnet ist und zumindest endseitig in Richtung der zweiten Gleitschiene (4) geneigt ausgebildet ist, welche zweite Gleitschiene (4) länger als die erste Gleitschiene (2) ausgebildet ist.

## Beschreibung

Die Erfindung betrifft eine Vorrichtung zum Zusammenstecken von Schraubenrohlingen und Unterlegscheiben nach dem Oberbegriff des Patentanspruchs 1.

Zur Herstellung von Schrauben mit an diesen verliersicher gehaltenen Unterlegscheiben werden zunächst Schraubenrohlinge mit einem Bolzen und einem an diesem angeformten Schraubenkopf hergestellt, welche durch die Bohrung einer Unterlegscheibe gesteckt werden, wonach in den Bolzen ein Außengewinde gewalzt wird. Zum Einstecken der Schraubenrohlinge in die entsprechenden Unterlegscheiben ist aus der DE 28 10 620 C2 eine Maschine bekannt, die einen schräg zur horizontalen angeordneten, antreibbaren Drehteller aufweist, der über seinen Umfang gleichmäßig verteilt Ausnehmungen zur Aufnahme der Bolzen der Schraubenrohlinge sowie koaxial zu diesen jeweils weitere Ausnehmungen zur Aufnahme der Unterlegscheiben aufweist. Die Zuführung der Schraubenrohlinge und der Unterlegscheiben erfolgt über angestellte Gleitschienen, die jeweils von einem Vorratsbehälter lagegerecht gespeist werden. Über eine Vereinzelungsscheibe werden die Unterlegscheiben in die Ausnahmen des Drehtellers eingebracht. Auf dem Drehteller sind Hubsegmente strahlenförmig angeordnet und um Achsen schwenkbar gelagert, die in Sehnenrichtung zum Drehteller verlaufen. Die Schraubenrohlinge werden von den Hubsegmenten aufgenommen und getaktet von diesen in die Bohrungen der darunter positionierten Unterlegscheiben eingesteckt.

Nachteilig an den vorbekannten Maschinen ist, dass diese sehr aufwendig herzustellen sind. Zudem weisen derartige Maschinen lange Rüstzeiten auf, wodurch deren Produktivität gemindert ist.

Hier will die Erfindung Abhilfe schaffen. Der Erfindung liegt die Aufgabe zu Grunde, eine Vorrichtung zum Zusammenstecken von Schraubenrohlingen und Unterlegscheiben bereitzustellen, die aufwandminimiert herstellbar ist und bei der die Produktivität bei gleichzeitig reduzierter Rüstzeit erhöht ist. Gemäß der Erfindung wird diese Aufgabe durch die Merkmale des Patentanspruchs 1 gelöst.

Mit der Erfindung ist eine Vorrichtung zum Zusammenstecken von Schraubenrohlingen und Unterlegscheiben bereitgestellt, die aufwandminimiert herstellbar ist und deren Produktivität bei gleichzeitig reduzierter Rüstzeit erhöht ist. Durch die konzentrisch zueinander angeordneten beiden Rütteltöpfe (auch Vibrationswendelförderer genannt) ist eine kontinuierliche, gleichzeitige Ausrichtung und Bereitstellung von Schraubenrohlingen und Unterlegscheiben erzielt, welche über die Vibrationsbewegungen der Rütteltöpfe entlang ihrer Wendeln sowie der daran angeordneten Gleitschienen bewegt werden. Hierdurch entstehen zwei zueinander parallel angeordnete Schraubenrohling- und Unterlegscheibenströme. Durch die endseitige Neigung der zweiten Gleitschiene werden die Schraubenrohlinge winklig auf die mit Bohrungen versehenen Unterlegscheiben zubewegt, die aneinandergereiht eine durchgehende, gelöcherte Fläche ausbilden. Bei Kontakt eines Bolzens eines Schraubenrohlings mit dem Unterlegscheibenstrom wird dieser entlang der durch die Unterlegscheiben gebildeten Fläche bewegt, bis er bedingt durch die Schwerkraft in eine Bohrung einer Unterlegscheibe eintritt, welche den Bolzen mitnimmt, der gleichzeitig bis zum Aufliegen des Schraubenkopfes auf der Unterlegscheibe in deren Bohrung eindringt. Der so mit der Unterlegscheibe versehene Schraubenrohling wird dann über die erste Gleitschiene zu einer - nicht dargestellten - Gewindewalzeinrichtung transportiert.

In Weiterbildung der Erfindung ist der zweite Rütteltopf mit dem ersten Rütteltopf einstückig verbunden. Durch eine solche integrierte Bauweise ist eine aufwandminimierte Herstellung mit gleichzeitig kompakter Bauweise erzielt.

In Weiterbildung der Erfindung ist der wenigstens eine Schwingungserreger mit einer Steuereinrichtung verbunden, über welche die Schwingungsfrequenz und die Amplitude der Schwingung einstellbar ist. Hierdurch ist die Fördergeschwindigkeit von Schraubenrohlingstrom und Unterlegscheibenstrom einstellbar.

Der Schwingungserreger umfasst vorzugsweise eine Spule, die mit Wechselstrom betrieben wird und einen Elektromagneten ausbildet. Der Körper des Rütteltopfes gerät durch den Schwingungserreger um seinen Mittelpunkt in Schwingung. Bei jeder Vibrationsbewegung in Förderrichtung wird durch den mechanischen Aufbau des jeweiligen Rütteltopfes mit den in diesem verlaufenden Vibrationswendeln eine Aufwärtsbewegung vollführt. Hierdurch werden die Schrauben bzw. die Unterlegscheiben mit bewegt. Bei den jeweils nachfolgenden Vibrationsbewegungen gegen die Förderrichtung findet jeweils eine Abwärtsbewegung statt und das Fördergut hat keinen oder nur einen geringen mechanischen Kontakt zur Auflagefläche der Wendel. Durch die Massenträgheit des Förderguts (Schraubenrohling, bzw. Unterlegscheiben) verharrt dieses und wird durch die nächste Vibrationsbewegung in Förderrichtung weiter bewegt (Mikrowurfprinzip).

In weiterer Ausgestaltung der Erfindung ist jeder Rütteltopf mit einem separaten Schwingungserreger verbunden. Hierdurch sind die einzelnen Förderergeschwindigkeiten des Schraubenrohlingstroms sowie des Unterlagscheibenstroms genau einstellbar.

In weiterer Ausgestaltung der Erfindung ist der wenigstens eine Schwingungserreger derart ausgebildet und eingerichtet, dass der über den zweiten Rütteltopf erzeugte Unterlegscheibenstrom eine höhere Geschwindigkeit aufweist, als der über den ersten Rütteltopf erzeugte Schraubenrohlingstrom. Hierdurch ist ein zügiges Einfädeln der Schraubenbolzen in die Bohrungen der Unterlegscheiben bewirkt. Dabei ist gleichzeitig eine erhöhte Einsteckquote erzielt.

In Ausgestaltung der Erfindung ist oberhalb der ersten Gleitschiene eine Begrenzungsschiene zur vertikalen Führung der Schraubenrohlinge angeordnet. Hierdurch ist eine gleichmäßige Zuführung der Bolzen der Schraubenrohlinge auf die durch die Unterlegscheiben gebildete Oberfläche erzielt.

In weiterer Ausgestaltung der Erfindung ist oberhalb wenigstens eines Abschnitts der zweiten Gleitschiene wenigstens eine Niederhalteschiene angeordnet, die entlang dieses Abschnitts verläuft. Hierdurch ist eine hohe Gleichmäßigkeit der durch den Unterlegscheibenstrom gebildeten Oberfläche erzielt. Ein unabsichtliches Herausspringen von Unterlegscheiben ist so verhindert.

In Weiterbildung der Erfindung ist wenigstens eine Druckluftquelle angeordnet, deren Druckluftstrom in einem spitzen Winkel auf die erste Gleitschiene gerichtet ist. Hierdurch ist die gleichmäßige Bewegung der Schraubenrohlinge entlang der ersten Gleitschiene erzielt.

In weiterer Ausgestaltung der Erfindung ist wenigstens eine Druckluftquelle angeordnet, deren Druckluftstrom quer zu einem außerhalb der ersten Gleitschiene befindlichen Abschnitt der zweiten Gleitschiene gerichtet ist. Hierdurch ist ein Ausbringen von Unterlegscheiben, die nicht durch einen Schraubenrohling durchdrungen sind, erzielt.

Andere Weiterbildungen und Ausgestaltungen der Erfindung sind in den übrigen Unteransprüchen angegeben. Ein Ausführungsbeispiel der Erfindung ist in den Figuren dargestellt wird nachfolgend im Einzelnen beschrieben. Es zeigen:

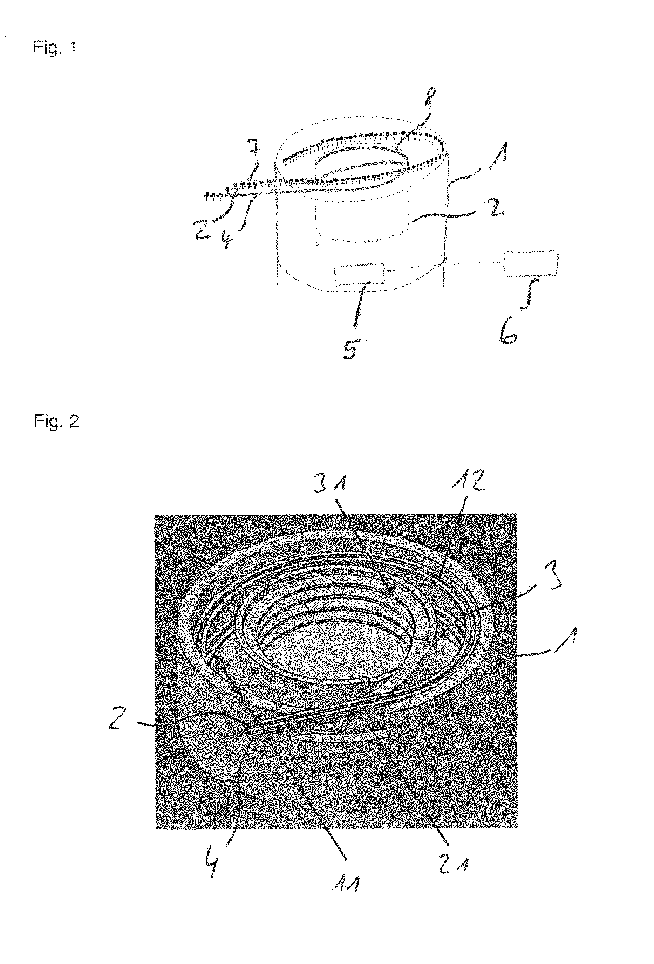

- Figur 1: die schematische Darstellung einer Vorrichtung zum Zsammenstecken von Schraubenrohlingen und Unterlegscheiben;
- Figur 2: die schematische Darstellung der Rütteltöpfe der Vorrichtung nach Figur 1;
- Figur 3: die schematische Darstellung des Zusammensteckprozesses der Vorrichtung nach Figur 1;
- Figur 4: die Detailansicht der Gleitschienenanordnung der Vorrichtung nach Figur 1;
- Figur 5: eine weitere Detailansicht des endseitigen Bereichs der ersten Gleitschiene der Vorrichtung nach Figur 1 und
- Figur 6: die schematische Darstellung des Zusammensteckprozesses am Endabschnitt der ersten Gleitschiene der Vorrichtung nach Figur 1.

Die als Ausführungsbeispiel gewählte Vorrichtung zum Zusammenstecken von Schraubenrohlingen und Unterlegscheiben besteht im Wesentlichen aus einem ersten Rütteltopf 1 zur Aufnahme der Schraubenrohlinge 7 sowie einem konzentrisch zu dem ersten Rütteltopf 1 in diesem angeordneten und mit diesem einstückig verbundenen zweiten Rütteltopf 3 zur Aufnahme von Unterlegscheiben 8. Die erste Wendel 11 des ersten Rütteltopfs 1 weist mittig einen Führungsschlitz 12 zum Durchtritt der Bolzen 72 der Schraubenrohlinge 7 auf und geht in eine erste Gleitschiene 2 über, welche ebenfalls mit einem Führungsschlitz 21 versehen ist. Die erste Gleitschiene 2 ist über eine beabstandet zu dieser angeordneten Begrenzungsschiene 23 abgedeckt, wodurch eine axiale Führung der Schraubenköpfe 71 der Schraubenrohlinge 7 gebildet ist. Endseitig ist die erste Gleitschiene 2 in Richtung der parallel zu dieser und unter dieser angeordneten zweiten Gleitschiene 4 abgelenkt ausgebildet.

Die zweite Gleitschiene 4 ist mit der zweiten Wendel 31 des zweiten Rütteltopfs 3 verbunden. Zur Führung der von der zweiten Gleitschiene 4 aufgenommenen Unterlegscheiben 8 ist diese mit zwei gegenüberliegend angeordneten Niederhalteschienen 41 versehen, zwischen denen ein Spalt 42 gebildet ist, durch den ein Durchtritt der Bolzen 72 der Schraubenrohlinge 7 zum Eintritt in die Bohrungen 81 der Unterlegscheiben 8 ermöglicht ist.

Die einstückig miteinander verbundenen Rütteltöpfe 1, 3 sind mit einem Schwingungserreger 5 verbunden, der im Ausführungsbeispiel einen mit Wechselstrom betriebenen Elektromagneten aufweist. Die Schwingung der Rütteltöpfe 1, 3 wird hier durch das Magnetfeld einer Spule erzeugt. Der Schwingungserreger 5 ist mit einer Steuerung 6 verbunden, über welche die Amplitude sowie die Schwingfequenz und somit die Fördergeschwindigkeit der Schraubenrohlinge 7 bzw. der Unterlegscheiben 8 auf den Gleitschienen 2, 4 einstellbar ist.

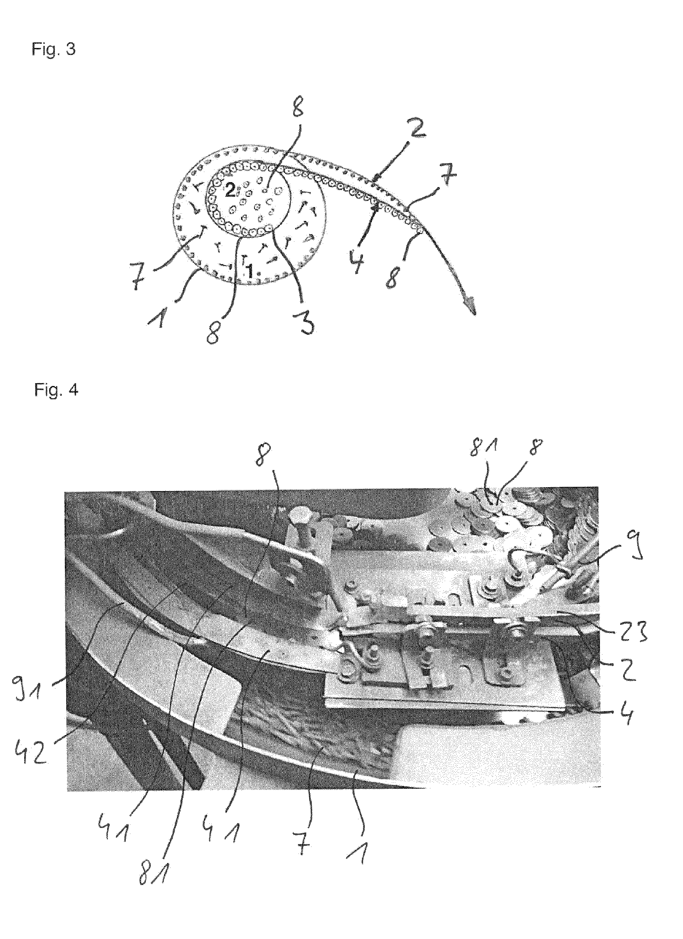

Der Zusammensteckprozess der vorstehend beschriebenen Vorrichtung ist schematisch in Figur 3 dargestellt. Der erste Rütteltopf 1 wird mit Schraubenrohlingen 7 und der zweite Rütteltopf 3 mit Unterlegscheiben 8 befüllt. Durch die mittels des Schwingungserregers 5 auf die Rütteltöpfe 1, 3 übertragenen Schwingungen bzw. Vibrationen werden kontinuierlich Schraubenrohlinge 7 auf die erste Wendel des ersten Rütteltopfes 1 geförtert, und zwar derart, dass die Schraubenköpfe 71 der Schraubenrohlinge auf der ersten Wendel 1 aufliegen, wobei die Bolzen 72 durch den Führungsschlitz 12 der ersten Wendel 11 hindurchragen. Gleichermaßen werden kontinuierlich Unterlegscheiben 8 auf die zweite Wendel 31 des zweiten Rütteltopfs 3 geförtert. Auf der ersten Wendel 11 ist so ein Schraubenrohlingstrom 7 gebildet, der sich entlang der ersten Wendel 1 über die mit dieser verbundenen ersten Gleitschiene 2 bewegt, sowie ein Unterlegscheibenstrom 8, der sich entlang der zweiten Wendel 31 des zweiten Rütteltopfs 2 sowie der mit dieser verbundenen zweiten Gleitschiene 4 bewegt.

Der Schwingungserreger 5 ist über die Steuerung 6 derart angesteuert, dass die Geschwindigkeit des Unterlegscheibenstroms 8 auf der zweiten Gleitschiene 4 größer ist, als der Schraubenrohlingstrom entlang der ersten Gleitschiene 2. Der Unterlegscheibenstrom 8 ist durch aneinander liegende Unterlegscheiben 8 gebildet, welche eine ebene Fläche ausbilden, in der beabstandet zueinander die Bohrungen 81 der Unterlegscheiben 8 in einer Linie angeordnet sind.

Der Zusammensteckprozess der vorstehend beschriebenen Vorrichtung ist schematisch in Figur 3 dargestellt. Der erste Rütteltopf 1 wird mit Schraubenrohlingen 7 und der zweite Rütteltopf 3 mit Unterlegscheiben 8 befüllt. Durch die mittels des Schwingungserregers 5 auf die Rütteltöpfe 1, 3 übertragenen Schwingungen bzw. Vibrationen werden kontinuierlich Schraubenrohlinge 7 auf die erste Wendel des ersten Rütteltopfes 1 beschickt, und zwar derart, dass die Schraubenköpfe 71 der Schraubenrohlinge auf der ersten Wendel 1 aufliegen, wobei die Bolzen 72 durch den Führungsschlitz 12 der ersten Wendel 11 hindurchragen. Gleichermaßen werden kontinuierlich Unterlegscheiben 8 auf die zweite Wendel 31 des zweiten Rütteltopfs 3 bewirkt. Auf der ersten Wendel 11 ist so ein Schraubenrohlingstrom 7 gebildet, der sich entlang der ersten Wendel 1 über die mit dieser verbundenen ersten Gleitschiene 2 bewegt, sowie ein Unterlegscheibenstrom 8, der sich entlang der zweiten Wendel 31 des zweiten Rütteltopfs 2 sowie die mit dieser verbundenen zweiten Gleitschiene 4 bewegt. Der Schwingungserreger 5 ist über die Steuerung 6 derart angesteuert, dass die Geschwindigkeit des Unterlegscheibenstroms 8 auf der zweiten Gleitschiene 4 größer ist, als der Schraubenrohlingstrom entlang der ersten Gleitschiene 2. Der Unterlegscheibenstrom 8 ist durch aneinander liegende Unterlegscheiben 8 gebildet, welche eine ebene Fläche ausbilden, in der beabstandet zueinander die Bohrungen 81 der Unterlegscheiben 8 angeordnet sind.

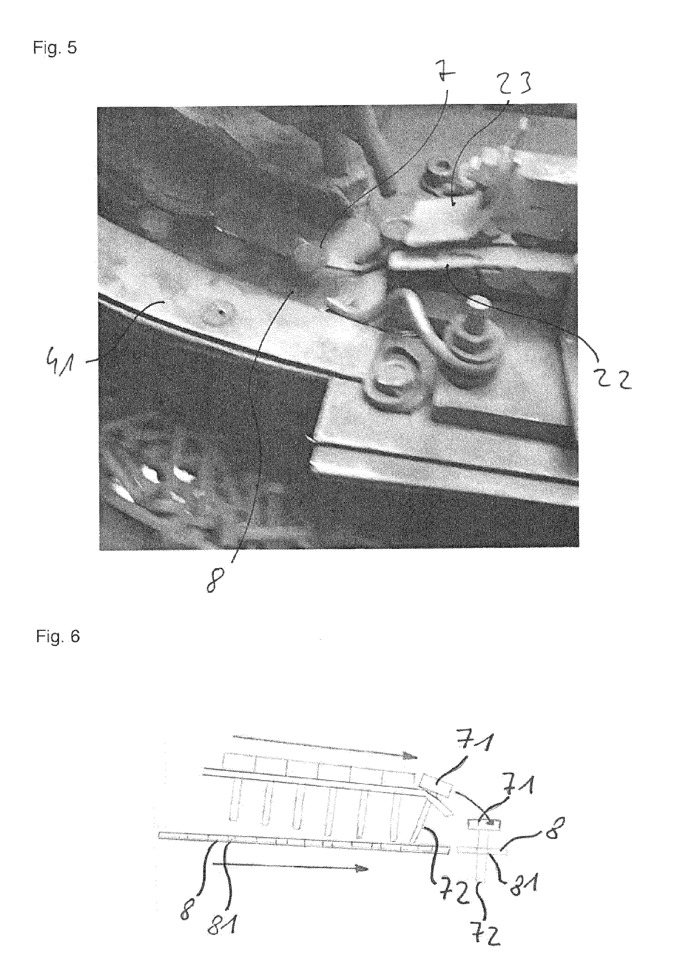

Der Zusammensteckvorgang findet am Übergang des abgelenkten Endabschnitts 22 der ersten Gleitschiene 2 zur zweiten Gleitschiene 4 statt und ist schematisch in Figur 6 dargestellt. Die Schraubenrohlinge 7 gleiten mit ihren Schraubenköpfen 71 entlang der ersten Gleitschiene 2, bis deren Bolzen 72 auf eine Unterlegscheibe 8 der durch den Unterlegscheibenstrom 8 gebildeten ebenen Fläche auftreffen. Der jeweilige Bolzen 72 gleitet solange entlang dieser Fläche, bis er auf die Bohrung 71 einer Unterlegscheibe 8 trifft, durch die der Bolzen bedingt durch seine Gewichtskraft hindurchtritt, bis der Schraubenkopf 71 des jeweiligen Schraubenrohlings 7 auf der Unterlegscheibe 8 aufliegt. Die auf diese Weise mit einer Unterlegscheibe 8 versehenen Schraubenrohlinge 7 werden sodann entlang der zweiten Gleitschiene bewegt und einer - nicht dargestellten - Gewindewalz-Vorrichtung zugeführt. Hierbei sind die Unterlegscheiben 8 zwischen der zweiten Gleitschiene 4 und den Niederhalteschienen 41 geführt, wobei die Schraubenköpfe 71 innerhalb des zwischen den Niederhalteschienen 41 gebildeten Spalts 42 angeordnet sind

Wie aus Figur 4 ersichtlich, ist im Ausführungsbeispiel eine Druckluftleitung 9 angeordnet, die winklig zu der ersten Gleitschiene 2 angestellt ist. Über diese Druckluftleitung 9 wird die Bewegung des Schraubenrohlingstroms unterstützt. Weiterhin ist eine zweite Druckluftleitung 91 derart angeordnet, dass ein kontinuierlicher Luftstrom quer zur zweiten Gleitschiene 4 zwischen dieser und den Niederhalteschienen 41 erfolgt. Durch diesen Luftstrom werden Unterlegscheiben, welche nicht mit einem Schraubenrohling 7 versehen sind, von der zweiten Gleitschiene 4 zurück in den zweiten Rütteltopf 3 gefördert.

Die erfindungsgemäße Vorrichtung zeichnet sich gegenüber dem Stand der Technik durch eine erheblich größeren Durchsatz aus, verbunden mit einer äußerst geringen Rüstzeit. Zudem ist für die Realisierung einer solchen Vorrichtung ein wesentlich geringerer Aufwand erforderlich. Nicht zuletzt ist der für diese Vorrichtung erforderliche Bauraum deutlich reduziert.

## Patentansprüche

1. Vorrichtung zum Zusammenstecken von Schraubenrohlingen und Unterlegscheiben, umfassend einen ersten Rütteltopf (1) zur Aufnahme der Schraubenrohlinge (7), dessen erste Wendel (11) mit einer ersten einen Führungsschlitz (12) zum Durchtritt der Bolzen (72) der Schraubenrohlinge (7) aufweisenden Gleitschiene (2) zur Führung der Schraubenrohlinge (7) verbunden ist, und einen zweiten Rütteltopf (3) zur Aufnahme der Unterlegscheiben (8), der innerhalb des ersten Rütteltopfes (1) konzentrisch zu diesem angeordnet ist und dessen zweite Wendel (31) mit einer zweiten Gleitschiene (4) zur Führung der Unterlegscheiben (8) verbunden ist, wobei die beiden Rütteltöpfe (1, 3) mit wenigstens einem Schwingungserreger (5) verbunden sind und wobei die erste Gleitschiene (2) wenigstens an einem Endabschnitt parallel zu der zweiten Gleitschiene (4) über dieser angeordnet ist und zumindest endseitig in Richtung der zweiten Gleitschiene (4) geneigt ausgebildet ist, welche zweite Gleitschiene (4) länger als die erste Gleitschiene (2) ausgebildet ist.

2. Vorrichtung nach Anspruch 1, **dadurch gekennzeichnet, dass** das der zweite Rütteltopf (3) mit dem ersten Rütteltopf (1) einstückig verbunden ist.

3. Vorrichtung nach Anspruch 1 oder 2, **dadurch gekennzeichnet, dass** der wenigstens eine Schwingungserreger (5) mit einer Steuerreinrichtung (6) verbunden ist, über welche die Schwingungsfrequenz und die Amplitude der von dem Schwingungserreger (5) initiierten Schwingung einstellbar ist.

4. Vorrichtung nach einem der vorgenannten Ansprüche, **dadurch gekennzeichnet, dass** beide Rütteltöpfe (1, 3) jeweils mit einem separaten Schwingungserreger (5) verbunden sind.

5. Vorrichtung nach einem der vorgenannten Ansprüche, **dadurch gekennzeichnet, dass** der wenigstens eine Schwingungserreger (5) derart ausgebildet und eingerichtet ist, dass der über den zweiten Rütteltopf (3) erzeugte Unterlegscheibenstrom eine höhere Geschwindigkeit aufweist, als der über den ersten Rütteltopf (1) erzeugte Schraubenrohlingstrom.

6. Vorrichtung nach einem der vorgenannten Ansprüche, **dadurch gekennzeichnet, dass** oberhalb der ersten Gleitschiene (2) eine Begrenzungsschiene (23) zur vertikalen Führung der Schraubenrohlinge (7) angeordnet ist.

7. Vorrichtung nach einem der vorgenannten Ansprüche, **dadurch gekennzeichnet, dass** oberhalb wenigstens eines Abschnitts der zweiten Gleitschiene (4) wenigstens eine Niederhalteschiene (41) angeordnet ist, die entlang dieses Abschnitts verläuft.

8. Vorrichtung nach einem der vorgenannten Ansprüche, **dadurch gekennzeichnet, dass** wenigstens eine Druckluftquelle (9) angeordnet ist, deren Druckluftstrom in einem spitzen Winkel auf die erste Gleitschiene (2) gerichtet ist.

9. Vorrichtung nach einem der vorgenannten Ansprüche, **dadurch gekennzeichnet, dass** wenigstens eine Druckluftquelle (91) angeordnet ist, deren Druckluftstrom quer zu einem außerhalb der ersten Gleitschiene (2) befindlichen Abschnitt der zweiten Gleitschiene (4) gerichtet ist.

## Geänderte Patentansprüche

### Geänderte Patentansprüche gemäss Regel 137(2) EPÜ.

1. Vorrichtung zum Zusammenstecken von Schraubenrohlingen und Unterlegscheiben, umfassend einen ersten Rütteltopf (1) zur Aufnahme der Schraubenrohlinge (7), dessen erste Wendel (11) mit einer ersten einen Führungsschlitz (12) zum Durchtritt der Bolzen (72) der Schraubenrohlinge (7) aufweisenden Gleitschiene (2) zur Führung der Schraubenrohlinge (7) verbunden ist, und einen zweiten Rütteltopf (3) zur Aufnahme der Unterlegscheiben (8), der innerhalb des ersten Rütteltopfes (1) konzentrisch zu diesem angeordnet ist und dessen zweite Wendel (31) mit einer zweiten Gleitschiene (4) zur Führung der Unterlegscheiben (8) verbunden ist, wobei die beiden Rütteltöpfe (1, 3) mit wenigstens einem Schwingungserreger (5) verbunden sind und wobei die erste Gleitschiene (2) wenigstens an einem Endabschnitt parallel zu der zweiten Gleitschiene (4) über dieser angeordnet ist und zumindest endseitig in Richtung der zweiten Gleitschiene (4) geneigt ausgebildet ist, welche zweite Gleitschiene (4) länger als die erste Gleitschiene (2) ausgebildet ist, **dadurch gekennzeichnet, dass** der wenigstens eine Schwingungserreger (5) derart ausgebildet und eingerichtet ist, dass der über den zweiten Rütteltopf (3) erzeugte Unterlegscheibenstrom eine höhere Geschwindigkeit aufweist, als der über den ersten Rütteltopf (1) erzeugte Schraubenrohlingstrom.

2. Vorrichtung nach Anspruch 1, **dadurch gekennzeichnet, dass** das der zweite Rütteltopf (3) mit dem ersten Rütteltopf (1) einstückig verbunden ist.

3. Vorrichtung nach Anspruch 1 oder 2, **dadurch gekennzeichnet, dass** der wenigstens eine Schwingungserreger (5) mit einer Steuerreinrichtung (6) verbunden ist, über welche die Schwingungsfrequenz und die Amplitude der von dem Schwingungserreger (5) initiierten Schwingung einstellbar ist.

4. Vorrichtung nach einem der vorgenannten Ansprüche, **dadurch gekennzeichnet, dass** beide Rütteltöpfe (1, 3) jeweils mit einem separaten Schwingungserreger (5) verbunden sind.

5. Vorrichtung nach einem der vorgenannten Ansprüche, **dadurch gekennzeichnet, dass** oberhalb der ersten Gleitschiene (2) eine Begrenzungsschiene (23) zur vertikalen Führung der Schraubenrohlinge (7) angeordnet ist.

6. Vorrichtung nach einem der vorgenannten Ansprüche, **dadurch gekennzeichnet, dass** oberhalb wenigstens eines Abschnitts der zweiten Gleitschiene (4) wenigstens eine Niederhalteschiene (41) angeordnet ist, die entlang dieses Abschnitts verläuft.

7. Vorrichtung nach einem der vorgenannten Ansprüche, **dadurch gekennzeichnet, dass** wenigstens eine Druckluftquelle (9) angeordnet ist, deren Druckluftstrom in einem spitzen Winkel auf die erste Gleitschiene (2) gerichtet ist.

8. Vorrichtung nach einem der vorgenannten Ansprüche, **dadurch gekennzeichnet, dass** wenigstens eine Druckluftquelle (91) angeordnet ist, deren Druckluftstrom quer zu einem außerhalb der ersten Gleitschiene (2) befindlichen Abschnitt der zweiten Gleitschiene (4) gerichtet ist.
